# EUROPÄISCHE PATENTSCHRIFT

(11) **EP 0 322 649 B1**
(45) Veröffentlichungstag und Bekanntmachung des Hinweises auf die Patenterteilung: **04.08.1993**
(21) Anmeldenummer: 88120909.2
(22) Anmeldetag: 14.12.1988
(51) Int. Cl.: B01D 36/00, B01D 33/15

(54) **Verfahren und Vorrichtung zur Entgasung und Filtration von Flüssigkeiten**
Process and apparatus for degassing and filtering liquids
Procédé et dispositif de dégazage et de filtration des liquides

(30) Priorität: 29.12.1987 DE 3744422
(43) Veröffentlichungstag der Anmeldung: 05.07.1989
(73) Patentinhaber: DU PONT DE NEMOURS (DEUTSCHLAND) GMBH, 61352 Bad Homburg (DE); E.I. DU PONT DE NEMOURS AND COMPANY, Wilmington Delaware 19898 (US)
(72) Erfinder: Do, Dac Vong, Dr., D-6070 Langen (DE)
(74) Vertreter: Knoblauch, Ulrich, Dr.-Ing.

(56) Entgegenhaltungen:
- DE-A- 1 536 822
- GB-A- 1 002 819
- GB-A- 1 401 079
- US-A- 3 640 395

## Beschreibung

Die Erfindung bezieht sich auf ein Verfahren zur Entgasung und Filtration von Flüssigkeiten, bei dem ein Förderstrom der Flüssigkeit in einen Nutzstrom, der einem Verbraucher kontinuierlich über einen Hauptfilter zugeführt wird, und einen Teilstrom, der im Bereich des Hauptfilters entnommen und zur erneuten Verwendung zurückgeführt wird, unterteilt wird, sowie auf eine Vorrichtung zur Durchführung dieses Verfahrens.

Eine solche Entgasung und Filtration ist insbesondere für die Vorbereitung von Emulsionen, Lösungen oder Dispersionen geeignet, mit denen bei der Herstellung photographischer Filme, elektronischer Datenträger und ähnlicher Produkte ein Beschichten, insbesondere ein Gießen, erfolgt. Denn jede Gasblase und jeder Fremdpartikel führen zu Fehlern im fertigen Produkt.

Ein Verfahren und eine Vorrichtung der eingangs beschriebenen Art sind aus EP-B 0 046 919 bekannt. Hier dient als Hauptfilter eine Filterkerze, also ein Tiefenfilter. Dessen Filterkörper soll Fremdteilchen zurückhalten.

Luft- oder Gasbläschen sollen sich an der Oberfläche des Filterkörpers sammeln, vereinigen und in den oberen Teil der Filterkammer aufsteigen. Dort ist eine Rückleitung angeschlossen, über die ein mit Gasblasen versetzter Teilstrom zu einem Entgasungssystem geführt wird, worauf man das Material erneut in der Produktion verwenden kann. Da solche Filterkerzen nur eine begrenzte Standzeit haben, weil die Oberfläche des Filters und dessen Poren fortschreitend von den Blasen und Partikeln belegt werden, ist eine Umschaltvorrichtung vorgesehen, mit der eine zweite Filterkerze die Funktion der ersten Filterkerze übernehmen und letztere ausgetauscht werden kann.

Auf diese Weise läßt sich zwar eine kontinuierliche Entgasung und Filtration vornehmen. Infolge der zurückgehaltenen Blasen und Partikel ändert sich aber die Filtereigenschaft. Die dem Verbraucher zugeführte Flüssigkeit hat keine zeitlich konstante Korngrößenverteilung. Dies ist in vielen Prozessen, beispielsweise bei der Herstellung photographischer Filme, von Nachteil.

Es ist ferner bekannt, einen Filter durch Rückspülung kontinuierlich zu reinigen (US-A 36 35 348). Zu diesem Zweck ist an der zuflußseitigen Oberfläche des Filters ein Rotor angeordnet, der mit einem Radialschlitz an der Zuflußseite anliegt und dessen Innenraum mit einer Ablaufleitung verbunden ist. Derartige Filter werden hauptsächlich für die Behandlung von Abwasser und anderem Schmutzwasser, also Flüssigkeiten mit niedriger Viskosität und relativ groben Schmutzpartikeln, verwendet.

Der Erfindung liegt die Aufgabe zugrunde, ein Verfahren zur kontinuierlichen Entgasung und Filterung einer Flüssigkeit anzugeben, die nicht nur eine effektive Eliminierung der Blasen und Feststoffpartikel, sondern auch eine zeitlich konstante Korngrößenverteilung in der dem Verbraucher zuzuführenden Flüssigkeit gewährleistet.

Diese Aufgabe wird erfindungsgemäß dadurch gelöst, daß der eine kontinuierliche Säuberung der Filterfläche des Hauptfilters bewirkende Teilstrom zur Rückspülung jeweils eines Teils des Hauptfilters benutzt und seinerseits filtriert wird.

Infolge der Rückspülung sind die Filtereigenschaften des Hauptfilters konstant. Sie können so gewählt werden, daß die Nutzflüssigkeit völlig blasenfrei ist und oberhalb einer scharf definierten Trenngrenze keine Feststoffpartikel enthält. Der durch die Rückspülung verschmutzte Teilstrom wird in einem Zusatzfilter filtriert. An dieser Stelle sind Schwankungen der Filtereigenschaften unschädlich, da Flüssigkeit aus dem Rückstrom nur nach nochmaliger Filterung durch den Hauptfilter zum Verbraucher gelangen kann. Längere Standzeiten dieses Zusatzfilters sind daher zulässig. Seine Auswechslung macht keine Schwierigkeiten.

Der Teilstrom kann einen beliebigen Bruchteil des Förderstromes betragen, beispielsweise 5 bis 50 %. Da der rückspülende Teilstrom bereits durch den Hauptfilter filtriert worden war, wird man ihn nur so groß wählen, wie es zur Regenerierung des Hauptfilters notwendig ist.

Zweckmäßigerweise wird der Teilstrom nach der Filtration entgast. Bei der erneuten Verwendung sind daher Fremdpartikel und Gasblasen ganz oder weitgehend entfernt.

Empfehlenswert ist es auch, daß der Förderstrom zumindest teilweise entgast wird, bevor er in den Hauptfilter eintritt. Hierdurch wird die Belastung des Hauptfilters durch Luftbläschen klein gehalten.

Günstig ist es, wenn die Menge des Teilstroms in Abhängigkeit vom Bedarf des Verbrauchers steuer- oder regelbar ist. Man kann dann auf einfache Weise dafür sorgen, daß dem Verbraucher eine konstante Flüssigkeitsmenge pro Zeiteinheit zugeführt wird.

Eine Vorrichtung zur Entgasung und Filtration von Flüssigkeiten, insbesondere Beschichtungslösungen, zur Durchführung des Verfahrens, mit einer einen Hauptfilter aufweisenden Hauptfilteranordnung, an die eine Zuleitung für den Förderstrom, eine Verbraucherleitung für den Nutzstrom und eine Rückleitung für den im Bereich des Hauptfilters entnommenen Teilstrom angeschlossen ist, kennzeichnet sich dadurch, daß die Hauptfilteranordnung eine Rückspüleinrichtung aufweist, die den Teilstrom als Spülmittel benutzt und die Filterfläche des Hauptfilters fortschreitend kontinuierlich säubert, und daß in der Rückleitung ein Zusatzfilter angeordnet ist, wobei die Rückleitung in einen Behälter mündet, der mit der Zuleitung verbunden ist.

Vorzugsweise ist der Hauptfilter ein Oberflächenfilter. Solche Oberflächenfilter bestehen im allgemeinen aus einem Gewebe, beispielsweise aus Stahldrähten oder synthetischen Fasern. Für die Filterwirkung ist allein die Maschenweite wesentlich. Es ergeben sich scharfe und konstante, scharf definierte Trenngrenzen für die Feststoff-Filtration. Oberflächenfilter haben zwar eine geringe Standzeit. Dies ist aber wegen der Rückspülung ohne Nachteil.

Mit besonderem Vorteil hat der Oberflächenfilter eine lichte Maschenweite von 5 bis 50 µm. Bei einer solchen Maschenweite werden nicht nur die größeren Feststoffpartikel zurückgehalten sondern überraschenderweise auch Blasen, die kleiner sind als die verwendete Maschenweite. Gerade bezüglich kleiner Blasen ergibt sich eine außerordentlich gute Filtration. Es ist erstmals möglich, Gasblasen abzuscheiden, die eine kleinere Größe haben als die in Gießlösungen oder -dispersionen vorhandenen,
erwünschten Feststoffteilchen. Weiterhin liegt die Maschenweite in einer Größenordnung, wo kleine Druckdifferenzen ausreichen, um den Förderstrom wie auch den Rückspülstrom, der für eine vollständige Regenerierung erforderlich ist, durch den Filter hindurch zu treiben.

Günstig ist es, daß der Oberflächenfilter ein zwischen zwei mit Durchbrüchen versehenen Platten gehaltenes Gewebe aufweist. Die Platten geben dem feinen Gewebe eine ausreichende Steifigkeit.

Bei einer bevorzugten Ausführungsform weist die Zuflußseite des Hauptfilters nach oben und/oder zur Seite. Damit ist sichergestellt, daß die Richtung des Blasenauftriebs nicht mit der Strömungsrichtung durch den Filter übereinstimmt. Auch kleine Blasen können daher durch Kontakt mit dem Filtergewebe festgehalten werden, bis sie durch den rückspülenden Teilstrom in die Rückleitung mitgenommen werden.

Konstruktiv empfiehlt es sich, daß die Rückspüleinrichtung einen Rotor aufweist, der mit einem Radialschlitz an der Zuflußseite des Hauptfilters anliegt und dessen Innenraum mit der Rückleitung verbunden ist. Der Radialschlitz hat eine in Vergleich zur Filteroberfläche kleine Größe. Infolgedessen ergibt sich für die Rückspülung eine verhältnismäßig große Strömungsgeschwindigkeit, auch wenn der Teilstrom nur einen kleinen Bruchteil des Förderstroms ausmacht. Dies führt zu einer sehr intensiven Reinigung des Hauptfilters.

Günstig ist es, daß in der Zuleitung eine Förderpumpe und in der Rückleitung eine Zusatzpumpe angeordnet ist. Da der Verbraucher häufig mit Umgebungsdruck arbeitet, stellt die Zusatzpumpe sicher, daß eine ausreichende Druckdifferenz für das Rückspülen vorhanden ist.

Des weiteren kann die Zusatzpumpe bezüglich der Fördermenge verstellbar sein. Da die Menge des Teilstroms nicht kritisch ist, kann man auf diese Weise den Nutzstrom beeinflussen.

Insbesondere kann in der Verbraucherleitung ein Durchflußmesser angeordnet und in Abhängigkeit hiervon die Zusatzpumpe regelbar sein.

Der Zusatzfilter sollte zweckmäßigerweise ein Tiefenfilter sein. Der Tiefenfilter kann verhältnismäßig viel Festkörperpartikel aufnehmen. Daß Tiefenfilter mit zunehmender Beladung ihre Filtereigenschaft ändern, ist unschädlich, weil der so gereinigte Teilstrom den Verbraucher nur nach nochmaligen Durchtritt durch den Hauptfilter erreicht.

So kann der Tiefenfilter mindestens zwei Filterkerzen aufweisen, die mittels einer Umschaltvorrichtung abwechselnd in die Rückleitung einschaltbar sind. Das Umschalten kann in verhältnismäßig großen Zeitabständen erfolgen. Durch Austausch der verschmutzten Filterkerze werden die Partikel aus dem System herausgetragen.

Eine andere Möglichkeit besteht darin, daß der Tiefenfilter durch eine kontinuierlich bewegte Filterbahn, wie Papier, Vlies oder dergleichen, gebildet ist.

Des weiteren sollte der Behälter als Entgasungsbehälter ausgebildet sein. Es ist dann unerheblich, wenn der Tiefenfilter eine unvollkommene Entgasung bewirkt.

Um eine besonders intensive Entgasung zu bewirken, empfiehlt es sich, daß der Entgasungsbehälter unter Vakuum steht. Eine andere Möglichkeit, die auch gleichzeitig angewendet werden kann, besteht darin, daß er einen Ultraschallerzeuger aufweist.

Die Erfindung wird nachstehend anhand eines in der Zeichnung dargestellten bevorzugten Ausführungsbeispiels näher erläutert. Es zeigen:
- Fig. 1: ein Schaltbild einer erfindungsgemäßen Entgasungs- und Filtrations-Vorrichtung,
- Fig. 2: einen Querschnitt durch den Hauptfilter mit Rückspüleinrichtung,
- Fig. 3: eine Draufsicht auf den Hauptfilter und
- Fig. 4: eine abgewandelte Form des Zusatzfilters.

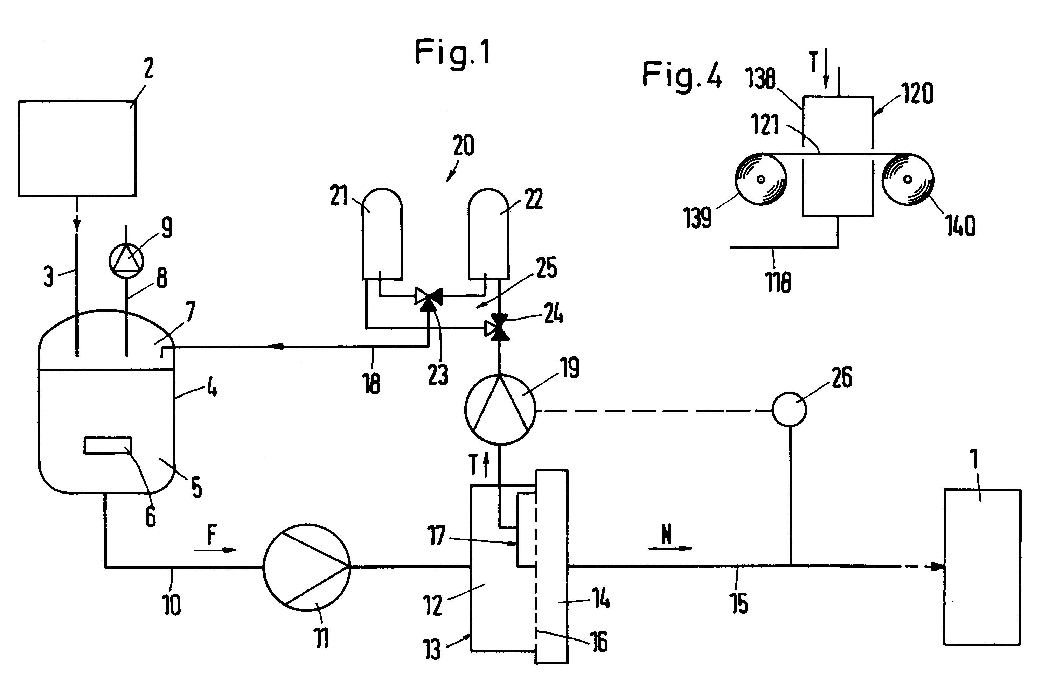

Gemäß Fig. 1 wird ein Verbraucher 1, beispielsweise eine Beschichtungsanlage zur Herstellung photographischer Filme, von einem Vorratsbehälter 2 aus mit Flüssigkeit versorgt, beispielsweise einer Gießemulsion.

Die Flüssigkeit wird über eine Verbindungsleitung 3 bei Bedarf einem Entgasungsbehälter 4 zugeführt, in dessen Flüssigkeitsraum 5 sich ein oder mehrere Ultraschall-Erzeuger 6 befinden. Die Gasblasen steigen nach oben in einen Gasraum 7. Das Gas kann über eine Leitung 8 nach außen abgeführt werden. Zweckmäßigerweise befindet sich in ihr eine Saugpumpe 9, mit der der Innenraum 7 unter Vakuum oder Unterdruck gesetzt werden kann.

Vom Entgasungsbehälter 4 führt eine Zuleitung 10, die eine Förderpumpe 11 aufweist, zur Eingangskammer 12 einer Hauptfilteranordnung 13. Deren Ausgangskammer 14 ist über eine Verbraucherleitung 15 mit dem Verbraucher 1 verbunden. Zwischen den Kammern 12 und 14 befindet sich ein als Oberflächenfilter ausgebildeter Hauptfilter 16, der Feststoffpartikel und Gasblasen zurückhält, so daß die Flüssigkeit mit der gewünschten Reinheit zum Verbraucher 1 gelangt.

Die Hauptfilteranordnung 13 besitzt eine Rückspüleinrichtung 17, die über eine Rückleitung 18 mit dem Entgasungsbehälter 4 verbunden ist. In der Rückleitung befindet sich eine Zusatzpumpe 19 und eine Zusatzfilteranordnung 20, die zwei als Tiefenfilter, wie Kerzenfilter, ausgebildete Zusatzfilter 21 und 22 aufweist. Mit Hilfe einer zwei Dreiwegeventile 23 und 24 aufweisenden Umschaltvorrichtung 25 wird wahlweise der eine oder der andere Zusatzfilter in die Rückleitung 18 geschaltet.

Die Förderpumpe 11 wird mit konstanter Drehzahl angetrieben und hat daher ein annähernd konstantes Fördervolumen. Die Zusatzpumpe 19 ist hinsichtlich des Fördervolumens einstellbar. Sie wird in Abhängigkeit von einem Durchflußmesser 26, der die Strömungsmenge in der Verbraucherleitung 15 mißt, geregelt.

Wenn die Förderpumpe 11 arbeitet, wird ein Förderstrom F durch die Zuleitung 10 geleitet. Dieser Förderstrom F wird im Hauptfilter 16 in einen Nutzstrom N, der über die Verbraucherleitung 15 fließt, und einen Teilstrom T, der durch die Rückleitung 18, unterteilt. Variationen des Förderstroms F können durch eine Regelung des Teilstroms T derart ausgeglichen werden, daß der Nutzstrom N konstant ist.

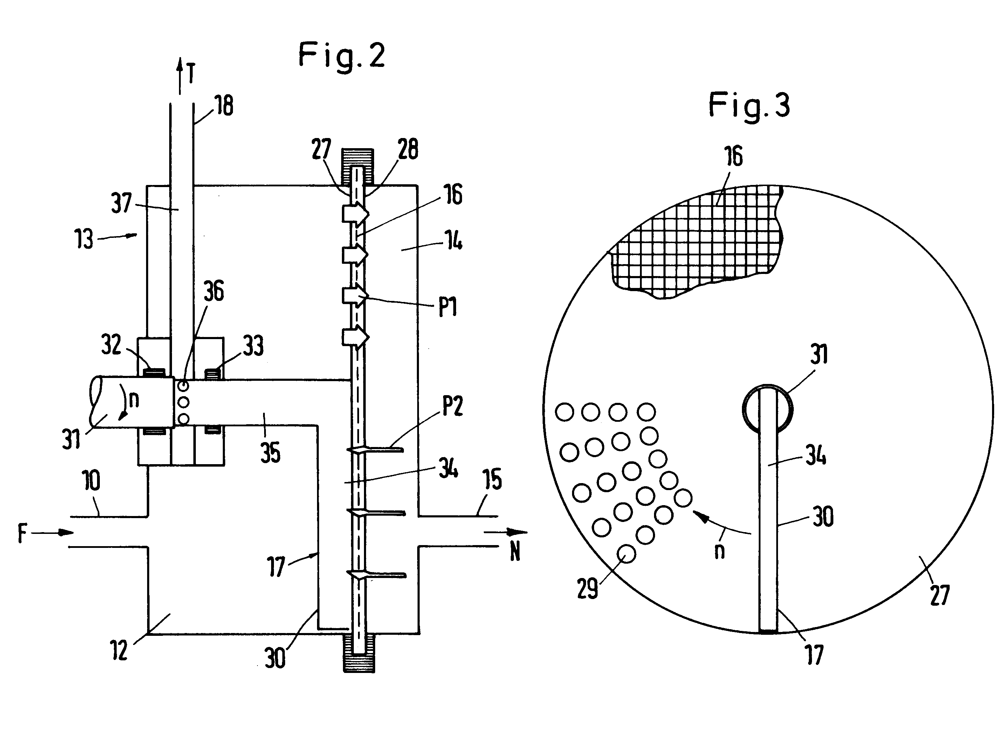

Die Hauptfilteranordnung 13 ist in den Fig. 2 und 3 näher veranschaulicht. Der Hauptfilter 16 wird durch ein Gewebe gebildet, das aus Stahldrähten oder synthetischen Fasern mit einer Maschenweite besteht, die zwischen 5 µm und 50 µm liegt. Dieses Gewebe ist zwischen zwei Platten 27 und 28 angeordnet, welche mit Löchern 29 versehen sind. Die Lochplatte 27 bildet demnach die Zuflußseite und die Lochplatte 28 die Abflußseite des Oberflächenfilters 16. Die durch den Hauptfilter in Nutzrichtung hindurch tretende Flüssigkeit ist durch die Pfeile P1 dargestellt.

Die Rückspüleinrichtung 17 weist einen Rotor 30 auf, der an einer angetriebenen Drehachse 31 befestigt ist. Diese ist in Lagern 32 und 33 gelagert. Sie dreht in Richtung des Pfeils n. Der Rotor 30 liegt mit einem Radialschlitz 34 an der Zuflußseite des Hauptfilters 16 an. Von der Zusatzpumpe 19 angesaugte Flüssigkeit tritt entsprechend den Pfeilen P2 aus der Abflußkammer 14 über den Radialschlitz 34 in den hohlen Innenraum 35 der Drehachse 31 und von dort über Radialbohrungen 36 in einen mit der Rückleitung 18 verbundenen Radialkanal 37. Diese Flüssigkeit bildet den Teilstrom T, der eine kontinuierliche Säuberung des Hauptfilters 16 durch die Rückspülung bewirkt.

Der Teilstrom T nimmt die an der Zuflußseite des Hauptfilters 16 abgesetzten Feststoffpartikel und Gasblasen mit sich. In der Zusatzfilteranordnung 20 erfolgt eine Abscheidung dieser Feststoffpartikel in dem Zusatzfilter 21 bzw. 22, wobei auch ein Teil der Gasblasen abgeschieden wird. Der so gereinigte Teilstrom gelangt in den Entgasungsbehälter 4, wo auch der Rest der Gasblasen durch Ultraschall- und Vakuum-Behandlung entfernt wird. Die so gereinigte Flüssigkeit kann erneut zur Bildung des Förderstromes verwendet werden. Wenn der eine Zusatzfilter 21 verschmutzt ist, wird die Umschaltvorrichtung 25 umgeschaltet und der andere Zusatzfilter 22 in Betrieb genommen. Alsdann kann der erstgenannte Zusatzfilter 21 ausgewechselt oder gereinigt werden.

In Fig. 4 ist eine andere Form der Zusatzfilteranordnung 120 veranschaulicht, wobei für entsprechende Teile um 100 erhöhte Bezugszeichen verwendet sind. Hier wird als Zusatzfilter eine Vliesbahn 121 verwendet, die abgedichtet durch die Wände des Filtergehäuses 138 geführt ist. Die Vliesbahn wird langsam von einer Vorratsrolle 139 auf eine Abzugsrolle 140 gezogen.

### Beispiel 1

Eine lichtempfindliche Photoemulsion enthielt 9,6 Gew.% Silberbromid-Kristalle mit einer mittleren Korngröße von 0,6 µm sowie 8 Gew.% Gelatine und andere Bindemittel. Mit dieser Photoemulsion wurde eine 20 cm breite Bahnunterlage aus Polyester beschichtet. Der Nassauftrag betrug 60 g/m² und die Bahngeschwindigkeit 100 m/min.
- Wenn die Lösung ohne besondere Vorbereitung auf der Bahn aufgetragen wurde, ergaben sich im Film mehr als 20 Defekte pro laufendes Meter. Unter dem Mikroskop war zu erkennen, daß es sich um durch Blasen verursachte Defekte handelt. Die Größe dieser Blasen variierte von unbestimmbar klein (kleiner als 5 µm) bis über 100 µm.
- Wenn die Lösung mit Hilfe der beschriebenen Vorrichtung behandelt wurde, konnte kein Defekt auf dem beschichteten Film detektiert werden. Hierbei wurde ein Hauptfilter mit einer Maschenweite von 25 µm verwendet. Als Zusatzfilter wurde ein handelsüblicher Tiefenfilter verwendet, dessen Durchlaßgröße nach den Herstellerangaben 3 µm nominal und 20 µm absolut war. In der Entgasungskammer herrschte ein Vakuum von ca. 700 mbar absolut.

### Beispiel 2

Auf die gleiche Unterlage wurden gleichzeitig zwei Schichten aufgetragen. Die untere Schicht entspricht der im Beispiel 1 genannten Lösung. Die obere Schicht besteht aus einer Lösung mit 7 Gew.% Gelatine und 0,26 Gew.% Polymethylmethacrylat (PMMA)-Partikeln.
- Wenn die Lösungen ohne besondere Vorbereitung auf die Unterlage gebracht wurden, erkennt man auf dem entstandenen Film Defekte, die auf PMMA-Partikel größer als 30 µm zurückzuführen sind.
- Behandelt man die obere Lösung mit der in Beispiel 1 beschriebenen Vorrichtung, erkennt man auf dem Film keinen solchen Defekt mehr und keine Partikel, die größer als 25 µm sind.

Es werden daher alle Gasblasen und alle Partikel oder Agglomerate, die den Gießvorgang stören und Defekte auf dem Film verursachen, entfernt. Durch die Rückspülung läßt sich der Hauptfilter kontinuierlich mit gleichen Filtereigenschaften betreiben. Die Rückspülung erfolgt ohne Verlust des zu filtrierenden wertvollen Materials. Insbesondere bei Verwendung eines Oberflächenfilters als Hauptfilter ergibt sich eine scharf definierte und konstante Trenngrenze für die Feststoffiltration, wobei aber auch kleinere Gasblasen zurückgehalten werden. Man erhält eine effektive Filterung von Blasen und flexiblen, deformierbaren Partikeln, da keine hohe Druckdifferenz zwischen der Zuflußseite und Abflußseite des Hauptfilters durch den sich sonst aufbauenden Filterkuchen entsteht. Da die Blasentrennung sehr effektiv ist, kann eine intensive Entgasung angewendet werden ohne die Gefahr, daß Blasen durch starke Entgasung entstehen und sich dann nicht mehr beseitigen lassen.

## Patentansprüche

1. Verfahren zur Entgasung und Filtration von Flüssigkeiten, insbesondere Beschichtungslösungen, bei dem ein Förderstrom der Flüssigkeit in einen Nutzstrom, der einem Verbraucher kontinuierlich über einen Hauptfilter zugeführt wird, und einen Teilstrom, der im Bereich des Hauptfilters entnommen und zur erneuten Verwendung zurückgeführt wird, unterteilt wird, dadurch gekennzeichnet, daß der eine kontinuierliche Säuberung der Filterfläche des Hauptfilters bewirkende Teilstrom zur Rückspülung jeweils eines Teils des Hauptfilters benützt und seinerseits filtriert wird.

2. Verfahren nach Anspruch 1, dadurch gekennzeichnet, daß der Teilstrom nach der Filtration entgast wird.

3. Verfahren nach Anspruch 1 oder 2, dadurch gekennzeichnet, daß der Förderstrom zumindest teilweise entgast wird, bevor er in den Hauptfilter eintritt.

4. Verfahren nach einem der Ansprüche 1 bis 3 dadurch gekennzeichnet, daß die Menge des Teilstroms in Abhängigkeit vom Bedarf des Verbrauchers steuer- oder regelbar ist.

5. Vorrichtung zur Entgasung und Filtration von Flüssigkeiten, insbesondere Beschichtungslösungen, zur Durchführung des Verfahrens nach einem der Ansprüche 1 bis 4, mit einer einen Hauptfilter (16) aufweisenden Hauptfilteranordnung (13), an die eine Zuleitung (10) für den Förderstrom (F), eine Verbraucherleitung (15) für den Nutzstrom (N) und eine Rückleitung (18) für den im Bereich des Hauptfilters (16) entnommenen Teilstrom (T) angeschlossen ist, dadurch gekennzeichnet, daß die Hauptfilteranordnung (13) eine Rückspüleinrichtung (17) aufweist, die den Teilstrom (T) als Spülmittel benutzt und die Filterfläche des Hauptfilters (16) fortschreitend kontinuierlich säubert, und daß in der Rückleitung (18) ein Zusatzfilter (21, 22) angeordnet ist, wobei die Rückleitung (18) in einen Behälter (4) mündet, der mit der Zuleitung (10) verbunden ist.

6. Vorrichtung nach Anspruch 5, dadurch gekennzeichnet, daß der Hauptfilter (16) ein Oberflächenfilter ist.

7. Vorrichtung nach Anspruch 6, dadurch gekennzeichnet, daß der Oberflächenfilter (16) eine lichte Maschenweite von 5 bis 50 µm hat.

8. Vorrichtung nach den Ansprüchen 6 oder 7, dadurch gekennzeichnet, daß der Oberflächenfilter (16) ein zwischen zwei mit Durchbrüchen (29) versehenen Platten (27, 28) gehaltenes Gewebe aufweist.

9. Vorrichtung nach den Ansprüchen 5 bis 8, dadurch gekennzeichnet, daß die Zuflußseite des Hauptfilters (16) nach oben und/oder zur Seite weist.

10. Vorrichtung nach den Ansprüchen 5 bis 9, dadurch gekennzeichnet, daß die Rückspüleinrichtung (17) einen Rotor (30) aufweist, der mit einem Radialschlitz (34) an der Zuflußseite des Hauptfilters (16) anliegt und dessen Innenraum mit der Rückleitung (18) verbunden ist.

11. Vorrichtung nach den Ansprüchen 5 bis 10, dadurch gekennzeichnet, daß in der Zuleitung (10) eine Förderpumpe (11) und in der Rückleitung (18) eine Zusatzpumpe (19) angeordnet ist.

12. Vorrichtung nach Anspruch 11, dadurch gekennzeichnet, daß die Zusatzpumpe (19) bezüglich der Fördermenge verstellbar ist.

13. Vorrichtung nach Anspruch 11, dadurch gekennzeichnet, daß in der Verbraucherleitung (15) ein Durchflußmesser (26) angeordnet und in Abhängigkeit hiervon die Zusatzpumpe (19) regelbar ist.

14. Vorrichtung nach den Ansprüchen 5 bis 13, dadurch gekennzeichnet, daß der Zusatzfilter (21, 22) ein Tiefenfilter ist.

15. Vorrichtung nach Anspruch 14, dadurch gekennzeichnet, daß der Tiefenfilter (21, 22) mindestens zwei Filterkerne aufweist, die mittels einer Umschaltvorrichtung (25) abwechselnd in die Rückleitung (18) einschaltbar sind.

16. Vorrichtung nach Anspruch 14, dadurch gekennzeichnet, daß der Tiefenfilter (121) durch eine kontinuierlich bewegte Filterbahn, wie Papier, Vlies oder dergleichen, gebildet ist.

17. Vorrichtung nach den Ansprüchen 5 bis 16, dadurch gekennzeichnet, daß der Behälter (4) als Entgasungsbehälter ausgebildet ist.

18. Vorrichtung nach Anspruch 17, dadurch gekennzeichnet, daß der Entgasungsbehälter (4) unter Vakuum steht.

19. Vorrichtung nach Anspruch 17 oder 18, dadurch gekennzeichnet, daß der Entgasungsbehälter (4) einen Ultraschallerzeuger (6) aufweist.

## Claims

1. Process for the degassing and filtration of liquids, in particular coating solutions, in which a feed stream of the liquid is subdivided into a working stream which is continuously fed to a consumer via a main filter, and a part-stream which is withdrawn in the region of the main filter and recycled for reuse, characterised in that the part-stream effecting a continuous cleaning of the filter surface of the main filter is used for backwashing one part at a time of the main filter and is itself filtered.

2. Process according to Claim 1, characterised in that the part-stream is degassed after the filtration.

3. Process according to Claim 1 or 2, characterised in that the feed stream is at least partially degassed before it enters into the main filter.

4. Process according to one of Claims 1 to 3, characterised in that the flow rate of the part-stream can be controlled or regulated in dependence on the consumer's consumption.

5. Apparatus for the degassing and filtration of liquids, in particular coating solutions, for carrying out the process according to one of Claims 1 to 4, having a main filter arrangement (13) equipped with a main filter (16), to which main filter arrangement are connected a feed line (10) for the feed stream (F), a consumer line (15) for the working stream (N), and a return line (18) for the part-stream (T) withdrawn in the region of the main filter (16), characterised in that the main filter arrangement (13) is equipped with a backwash device (17) which uses the part-stream (T) as a washing medium and continuously progressively cleans the filter surface of the main filter (16), and in that an additional filter (21, 22) is arranged in the return line (18), the return line (18) opening into a vessel (4) which is connected to the feed line (10).

6. Apparatus according to Claim 5, characterised in that the main filter (16) is a surface filter.

7. Apparatus according to Claim 6, characterised in that the surface filter (16) has an open mesh width of 5 to 50 µm.

8. Apparatus according to Claims 6 or 7, characterised in that the surface filter (16) is provided with a cloth which is held between two plates (27, 28) which are furnished with through-holes (29).

9. Apparatus according to Claims 5 to 8, characterised in that the intake side of the main filter (16) points upwards and/or to the side.

10. Apparatus according to Claims 5 to 9, characterised in that the backwash device (17) is equipped with a rotor (30) which lies with a radial slot (34) against the intake side of the main filter (16) and whose interior is connected to the return line (18).

11. Apparatus according to Claims 5 to 10, characterised in that a feed pump (11) is arranged in the feed line (10) and an auxiliary pump (19) is arranged in the return line (18).

12. Apparatus according to Claim 11, characterised in that the auxiliary pump (19) is adjustable with respect to output.

13. Apparatus according to Claim 11, characterised in that a flow meter (26) is arranged in the consumer line (15) and the auxiliary pump (19) can be regulated in dependence thereon.

14. Apparatus according to Claims 5 to 13, characterised in that the auxiliary filter (21, 22) is a depth filter.

15. Apparatus according to Claim 14, characterised in that the depth filter (21, 22) is provided with at least two filter candles which can be alternately connected into the return line (18) by means of a changeover apparatus (25).

16. Apparatus according to Claim 14, characterised in that the depth filter (121) is formed by a continuously moved filter web, such as paper, non-woven fabric or the like.

17. Apparatus according to Claims 5 to 16, characterised in that the vessel (4) is designed as a degassing vessel.

18. Apparatus according to Claim 17, characterised in that the degassing vessel (4) is under vacuum.

19. Apparatus according to Claim 17 or 18, characterised in that the degassing vessel (4) is equipped with an ultrasound generator (6).

## Revendications

1. Procédé de dégazage et de filtration de liquide, notamment de solutions de revêtement ou enduction dans lequel un courant de transport du liquide est subdivisé en un courant utile qui est amené en continu à un poste d'utilisation par l'intermédiaire d'un filtre principal et en un courant auxiliaire qui est prélevé dans la zone du filtre principal et qui est recyclé pour une nouvelle utilisation, caractérisé en ce que le courant auxiliaire effectuant le nettoyage en continu de la surface filtrante du filtre principal est utilisé pour le rétro-rinçage de chacune des parties du filtre principal et en ce qu'il est a son tour filtré.

2. Procédé selon la revendication 1, caractérisé en ce que le courant secondaire est dégazé après filtration.

3. Procédé selon la revendication 1 ou 2, caractérisé en ce que le courant de transport est au noms en partie dégazé, préalablement à son entrée dans le filtre principal.

4. Procédé selon une quelconque des revendications 1 à 3, caractérisé en ce que le débit du courant secondaire est commandé ou réglé en fonction des besoins des utilisateurs.

5. Un dispositif de dégazage et filtration de liquides, notamment de solutions de revêtement ou enduction, pour la réalisation du procédé précité (5), comportant un dispositif de filtration principal (13) qui comporte un filtre principal (16) auquel est relié une conduite d'alimentation (10) pour le courant d'acheminement (F), une conduite d'utilisation (15) pour un courant de service (N) et une conduite de recyclage (18) pour le courant auxiliaire (T) prélevé du filtre principal (16) caractérisé en ce que le dispositif de filtration principal (13) comporte une installation de rétrorinçage (18) qui utilise le courant auxiliaire (T) pour le rinçage et nettoie en continu la surface filtrante du filtre principal (16) et en ce que dans la conduite de recyclage (18) est disposé un filtre supplémentaire (21, 22) cette conduite de recyclage (18) débouchant dans un récipient (4) qui est relié à la conduite d'acheminement (10).

6. Dispositif selon la revendication 5, caractérisé en ce que le filtre principal (16) est un filtre superficiel.

7. Dispositif selon la revendication 6, caractérisé en ce que le filtre superficiel (16) présente une largeur de mailles ouverte de 5 à 50 µm.

8. Dispositif selon la revendication 6 ou 7, caractérisé en ce que le filtre superficiel (16) comporte une toile maintenue entre deux plaques (27, 28) pourvues de perforations (29).

9. Dispositif selon les revendications 5 à 8, caractérisé en ce que la surface d'accès du filtre principal (16) est orientée vers le bas et/ou vers le côté.

10. Dispositif selon les revendications 5 à 9, caractérisé en ce que le dispositif de rétro-rinçage (17) comporte un rotor (30) qui s'appuie par une fente principale sur la surface d'accès du filtre principal (16) et dont l'espace intérieur est raccordé à la conduite de recyclage (18).

11. Dispositif selon l'une quelconque des revendications 5 à 10, caractérisé en ce que sur la conduite (10) se trouve une pompe de circulation (11) et sur la conduite de recyclage (18) se trouve une pompe supplémentaire (19).

12. Dispositif selon la revendication 11, caractérisé en ce que la pompe supplémentaire (19) est réglable en fonction de la quantité à transporter.

13. Dispositif selon la revendication 11, caractérisé en ce que dans la conduite (15) vers le poste d'alimentation se trouve un débitmètre (26) et en ce que le débit de la pompe supplémentaire (19) est réglée en conséquence.

14. Dispositif selon l'une quelconque des revendications 5 à 13, caractérisé en ce que le filtre supplémentaire (21, 22) est un filtre massif ou filtre profond.

15. Dispositif selon la revendication 14, caractérisé en ce que le filtre massif (21, 22) comporte au moins deux cartouches filtrantes que l'on peut alternativement mettre en circuit dans la conduite de recyclage (18) au moyen d'un dispositif de commutation (25).

16. Dispositif selon la revendication 14, caractérisé en ce que le filtre massif (121) est formé d'une bande filtrante se déplaçant en continu tel que papiers, feutres ou analogues.

17. Dispositif selon l'une quelconque des revendications 5 à 16, caractérisé en ce que le réservoir (4) est réalisé sous forme d'un réservoir de dégazage.

18. Dispositif selon la revendication 17, caractérisé en ce que le récipient de dégazage est mis sous vide.

19. Dispositif selon la revendication 17 ou 18, caractérisé en ce que le récipient de dégazage (4) comprend un générateur d'ultra-sons (6).
